# EUROPEAN PATENT SPECIFICATION

(11) **EP 1 853 030 B1**
(45) Date of publication and mention of the grant of the patent: **14.08.2013**
(21) Application number: 06705594.7
(22) Date of filing: 26.01.2006
(51) Int. Cl.: H04N 1/00, H04N 1/327, H04N 1/333, H04L 29/06

(54) **METHODS FOR T.38 GATEWAY PROCESSING OF NON-STANDARD FRAME (NSF) SIGNALS**
VERFAHREN ZUR T.38-GATEWAY-VERARBEITUNG VON NICHTSTANDARD-RAHMEN (NSF)
PROCÉDÉS DE TRAITEMENT PAR PASSERELLE T.38 DES TRAMES NON-STANDARD (NSF)

(30) Priority: 03.02.2005 CN 200510033094
(43) Date of publication of application: 07.11.2007
(73) Proprietor: Huawei Technologies Co., Ltd., Longgang District, Shenzhen Guangdong 518129 (CN)
(72) Inventor: LI, Ruihua, Huawei Administration Bldg., Shenzhen, Guangdong 518129 (CN)
(74) Representative: Kreuz, Georg Maria
(86) International application number: PCT/CN2006/000173
(87) International publication number: WO 2006/081769

(56) References cited:
- JP-A- 09 261 437
- JP-A- 2000 332 975
- JP-A- 2001 203 869
- JP-A- 2005 094 620
- US-A- 5 587 810
- US-A- 5 790 641
- US-A- 6 038 037
- US-A1- 2002 034 284
- US-A1- 2002 101 613
- "Procedures for real-time Group 3 facsimile communication over IP networks; T.38 (04/04)" ITU-T STANDARD SUPERSEDED (S), INTERNATIONAL TELECOMMUNICATION UNION, GENEVA, CH, no. T.38 (04/04), 22 April 2004 (2004-04-22), XP017405053

## Description

### Field of the Invention

The present invention relates to network facsimile technology, particularly to a method for processing Non-Standard Facilities (NSF) frame and Non-Standard Setup (NSS) frame by T.38 gateways during network facsimile.

### Background of the Invention

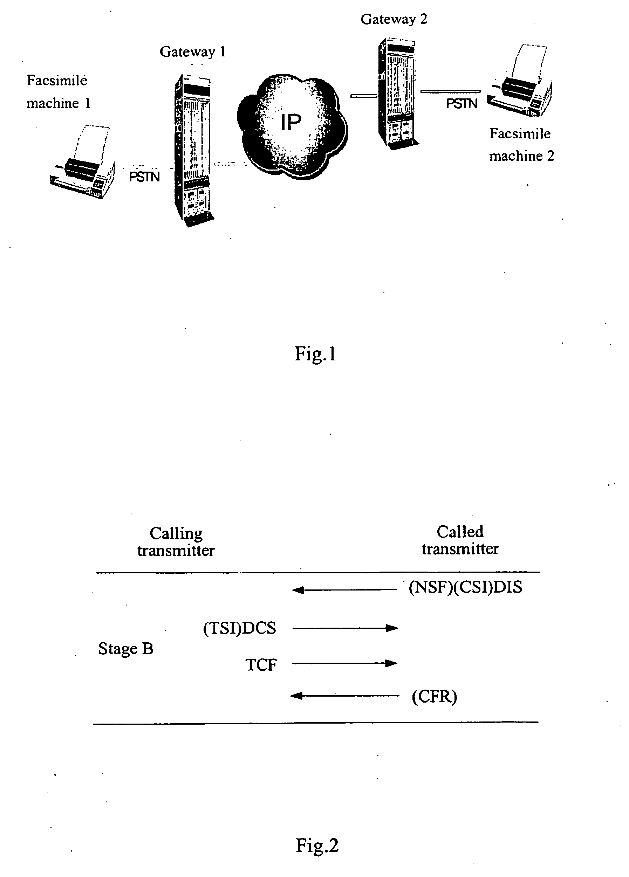

As Internet spreads and the technology becomes matured, it is possible to transmit facsimile information over Internet; therefore, techniques related with facsimile over IP, i.e., network facsimile emerge as the times require. Real-time T.38 facsimile over IP is a facsimile over IP technique that behaves well against packet loss and jitter, and is widely used in NGN. The architecture of real-time T.38 facsimile system is shown in Fig. 1 . In the real-time facsimile over IP system, two terminal facsimile machines 1 and 2 communicate with each other in real time in T.30 protocol; in facsimile communication each time, the two facsimile machines perform signaling interaction or sending and receiving of messages; when the data modulated and transmitted by either of the facsimile machines passes through the gateway, the gateway demodulates the modulated signals and encapsulates the demodulated data into T.38-compliant IP packets, and then sends the packets to the opposite gateway via the IP network; the opposite gateway extracts the data from the IP packets, modulates the data, and then sends the modulated data to the opposite facsimile machine.

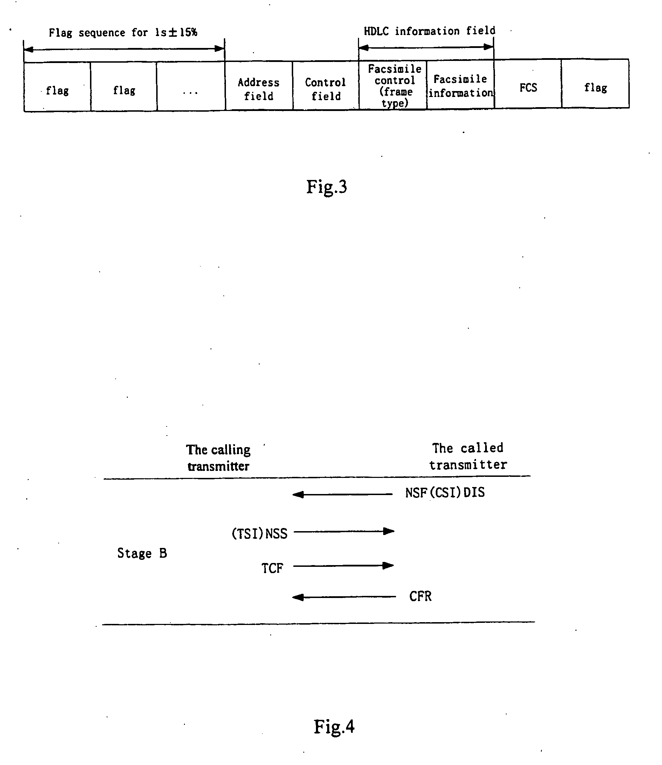

Common facsimile machines usually support sending messages of facsimile pages at the modulation/demodulation rate specified in ITU-T V.27ter/V.29/V.17 protocol. In T.30 protocol, the facsimile process is divided into 5 stages, wherein stage B is a procedure before sending message for negotiation and training of facsimile capability, as shown in Fig. 2: the called transmitter, i.e., the called facsimile machine, sends its capability identification DIS (DIS, Digital Identification Signal, sent by the facsimile receiver) and possible CSI (Called Subscriber Identification) or NSF frame signal (which indicates some attributes of facsimile operation are not specified in ITU standard); when receiving the signal, the calling transmitter, i.e., the calling facsimile machine, feeds back a receiving command DCS (Digital Command Signal), which provides information related with rate of the modulator, image width, image code, and page length, and may contain TSI (Transmitting subscriber identification) signal containing its phone number or NSS (Non-Standard Setup) signal that responds to the NSF frame, and then the calling facsimile machine sends a TCF signal; when receiving the TCF (Training Check Field) signal, the called transmitter feeds back a CFR (Confirmation to Receive) signal. In stage B of the facsimile process, as shown in Fig.2, the TCF signal includes full zero data modulated and transmitted at the rate specified in ITU-TV.27ter/V.29/V.17 protocol; other signals, such as (NSF)(CSI) DIS, (TSI) DCS, CFR, are all frames in HDLC format transmitted and received at the rate and in the modulation mode specified in ITU-T V.21 protocol. The HDLC frame format of a V.21 signal is shown in Fig.3.

In addition, the T.38 IFP (Internet Facsimile Protocol) packet of a complete V.21 frame includes: V.21 flag packet, i.e., T30-ind, which is a flag packet created for the flag sequence before the frame data; V.21 frame data packets, i.e., hdlc-data, which are created for the frame data from the address field to FCS (Frame Check Sequence) and may be multiple packets; FCS check result data packet, i.e., hdlc-fcs-ok if the data received and demodulated by the gateway is correct, or hdlc-fcs-bad if wrong; V.21 frame end packet, i.e., sig-end, which indicates the energy of V.21 frame signal received and demodulated by the gateway disappears.

After the called facsimile machine enters into stage B, it transmits a (NSF) (CSI) DIS signal actively, wherein NSF and CSI are optional, the data bits in which carries performance parameters of the facsimile machine, including the modulation/demodulation protocols, coding format, and ECM (Error Correction Mode), etc., supported by the facsimile machine in the message transmission stage. When the calling facsimile machine receives the DIS, it will negotiate with the called facsimile machine to determine the capability parameters supported by both parties in accordance with the capability information of the called facsimile machine carried in the DIS in combination with its own capability, and then sends the capability parameters to the called facsimile machine through a DCS. The called facsimile machine will determine the data rate for channel training and demodulating a received facsimile page data in accordance with the capability parameters in the DCS. In real-time T.38 facsimile over IP, when the DCS passes through the gateways, both the sending gateway and the receiving gateway will extract the parameters in the DCS, so as to accomplish modulation/demodulation of TCF data and message data. Since the DCS is a standard frame specified in T.30 protocol, which means each bit in the data field in the DCS is specified in this protocol, the gateway can extract the parameters from DCS and parse out information such as rate, etc.

As specified in T.30 protocol, in stage B, the facsimile machines can also negotiate parameters (e.g., rate) by means of signals such as NSF/NSS, etc. The process of rate negotiation by means of NSF signals in stage B is shown in Fig.4. After the called facsimile machine enters into stage B, it transmits an NSF/(CSI)/DIS, wherein CSI is optional. The data field in NSF contains country code of the facsimile machine manufacturer, manufacturer code, model number of the facsimile machine, and mode in which the rate parameter is carried, etc.; when the calling facsimile machine receives the NSF signal and if the calling facsimile machine complies with the called facsimile machine manufacturer's proprietary specification, it will return a NSS signal carrying the negotiation result: rate, whether support ECM mode, etc.; the subsequent process, i.e., the calling facsimile machine sends a TCF signal and the called facsimile machine transmits a CFR signal when receiving the TCF signal, is identical to the process for standard frames. However, in the case of network facsimile via T.38 gateways, since NSF and NSS are in the proprietary format specified by the facsimile machine manufacturer, T.38 gateways are unable to extract the parameters required for modulation/demodulation; as a result, in the case that non-standard frames are used, the facsimile process will surely fail.

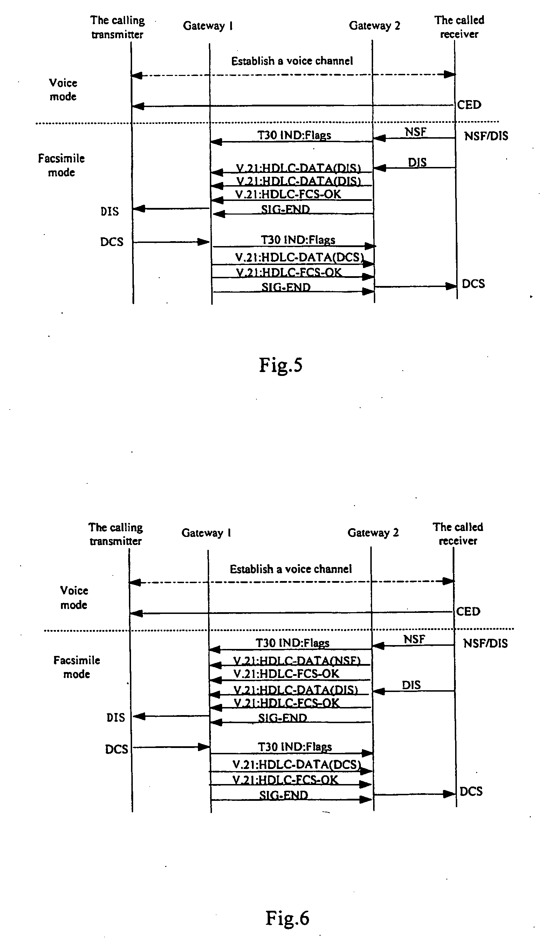

Therefore, in the prior art, the gateways have to determine V.21 frames received and demodulated at TOM (Time Division Multiplexing) side (i.e., a calling transmitter and gateway 1 side or a called receiver and gateway 2 side) and V.21 frames received at IP side; if an NSF is received at TDM side, as shown in Fig.5, the NSF will be discarded, i.e., the gateway will not encapsulate the NSF data into packets or send the packets to IP side. In this way, if the receiving facsimile machine sends an NSF/(CSI)/DIS, the signal that reaches actually to the transmitting facsimile machine will be only the (CSI) /DIS signal because the NSF is discarded by the gateway; and the transmitting facsimile machine will return a standard frame (TSI) /DCS as specified in T. 30 protocol; wherein the DCS carries information including modulation/demodulation rate and ECM mode, etc.

If an NSF frame signal is received at IP side, as shown in Fig. 6, the gateway will discard the NSF frame signal, i.e., it does not modulate the frame data and send to the transmitting facsimile machine, but continue to receive subsequent (CSI) /DIS frames at IP side, and modulate and transmit the (CSI)/DIS frames normally.

In above solution, though in general cases that the gateways discard NSF signals so as to render the facsimile machines to carry rate information through a standard command DCS, however, the solution has the following disadvantages:
T.30 protocol specifies: before one V.21 frame or multiple consecutive V. 21 frames are transmitted, a flag sequence (e. g. , "0x7e" modulated in V.21 format) of 1s±15% length must be transmitted, and any frame with delay in receiving or detection longer than 3.45s shall be discarded.

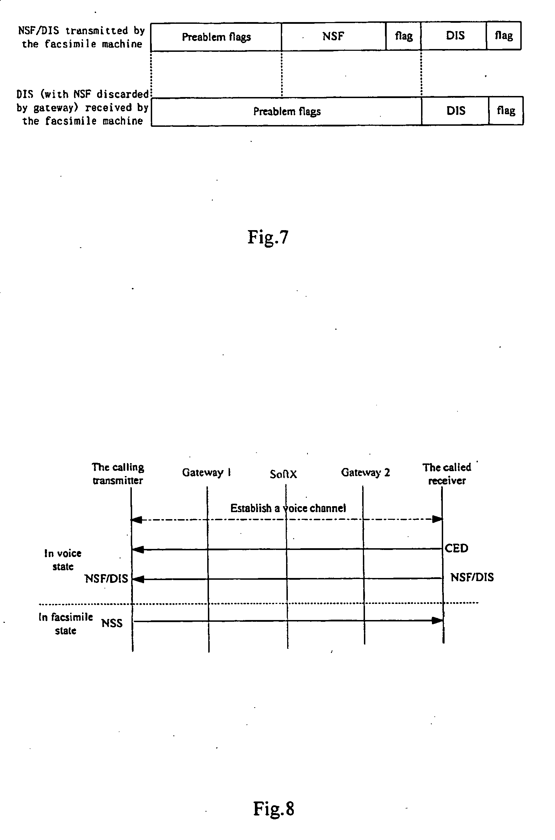

As shown in Fig.7, since the gateways will discard NSF frame, the transmitting gateway begins to modulate and send 0x7e once it receives the first flag (0x 7e) in the preamble sequence, till it receives a subsequent DIS frame; in this way, the receiving facsimile machine will deem the DIS as the first frame signal and all previous "0x7e" as belonging to the preamble sequence. However, some facsimile machines start timing once they receive the first "0x7e" and will deem the receiving command as failed if the receiving of DIS does not finish within 3.45s.

Furthermore, the gateways are in voice state initially, which switch to facsimile state only when they detect the characteristic signal of facsimile, CED or V.21flag (preamble code of (NSF)/DIS). In actual application of gateways, there are often cases that the gateways switch at a low speed due to complex soft-switch networking or the receiving gateway fails to detect facsimile events; in these cases, since intervention of NSF signals by T.38 gateways is only applicable to T.38 facsimile state, NSF signals may be transmitted transparently (in voice state) to the transmitting facsimile machine, as shown in Fig.8; the transmitting facsimile machine complying with the proprietary specifications will respond with a NSS signal, and thus the rate negotiation is still performed with proprietary frames; as a result, after the gateway switches to T.38 facsimile state, it is unable to extract the rate parameter, resulting in facsimile failure.

ITU-T Recommendation T.38 discloses a recommendation which defines the procedures to be applied to allow Group 3 facsimile transmission between terminals where in addition to the PSTN or ISDN a portion of the transmission path used between terminals includes an IP network, e.g. the Internet.

US patent application publication No. US2002/0101613A1 discloses a facsimile communication system including a calling and a called facsimile machine connected via a communication network. Each of the facsimile machines has a timer value representing a maximum allowable response time for a response signal relative to a signal transmitted to the counterpart facsimile machine. Using the timer value, each of the facsimile machines monitors whether the response signal is received from the counterpart facsimile machine within the timer value. If the response signal is not received within the timer value, retransmission of the transmitted signal is required. The called facsimile machine transmits all timer value change information for increasing the timer value to the calling facsimile machine. The calling facsimile machine selects the optimum timer value change information within the range of the timer value change information received from the called facsimile machine, and transmits the selected timer value change information to the called facsimile machine. The calling and called facsimile machines increase their timer values using the selected timer value change information. Accordingly, even if a communication delay is caused in the communication network, the retransmission of the transmitted signal can be avoided.

US patent application publication No. US 5790641 discloses a system and method for extending the time period at which a response signal can be received before a time-out occurs without altering the length of the time-out period defined in any transmission protocol, ensuring that the two faxes communicate using one of a predefined, e.g., standard, set of transmission protocols, and/or ensuring that the two faxes communicate using one of a predefined set of signal modulation techniques. The present invention receives signals transmitted from a local fax and transmits these signals to a remote fax. Similarly, the present invention receives signals transmitted from the remote fax and transmits these signals to the local fax. The present invention examines the contents of the signals and can modify the signal transmitted to the local fax in order to ensure that the two faxes communicate using a transmission protocol that is supported and to ensure that the two faxes communicate using a signal modulation technique that is supported.

US patent application publication No. US 5587810 discloses a facsimile interface unit, which encodes signals from a facsimile terminal for transmission by satellite, can only encode signals which conform to the Group 3 standard. The interface unit intercepts signals which identify non-standard features supported by the terminal and replaces them by a modified signal of the same format which does not identify any non-standard features. Another facsimile terminal receiving the modified signal is prevented from enabling any non-standard features and signals to the first facsimile terminal that the Group 3 standard is to be followed. Therefore, the facsimile interface unit is able to encode and decode signals successfully during the subsequent transmission.

US patent application publication No. US 6038037 discloses a novel and improvedmethod and apparatus for providing an interface to a digital wireless telephone system compatible with standard analog wire line fax machines is described. To process a fax, a source interface waits until an interface to a destination fax machine has been established before establishing an interface to a source fax machine. The source fax transmission rate must be less than or equal to the destination fax transmission rate and the data rate of the digital channel. To establish the source fax interface at the proper rate, the source interface first selects and initial data rate from a set of standard fax transmission rates. The source interface sends unacceptable rate (failure to train) messages to the source fax machine until the source fax transmission rate is less than or equal to the data channel rate and the destination fax transmission rate. During fax processing, the destination interface inserts non-printing data (fill bits) if the destination fax transmission rate is greater than the source fax transmission rate. Fill bits are also inserted to compensate for transmission delays.

### Summary of the Invention

An object of the present invention is to provide a method for processing NSF frame by T.38 gateways, so that the network facsimile machines perform rate negotiation with standard frames ultimately and the gateways can extract correct parameter information from a standard command DCS, and thereby network facsimile service can operate normally.

The present invention is implemented by the technical solutions set out in appended claims 1 and 5.

According to claim 1, a method for processing a Non-Standard Facilities (NSF) frame data by a T.38 receiving gateway is provided.

According to claims 5, a method for processing a Non-Standard facilities (NSF) frame data by a T.38 transmitting gateway is also provided.

The method for processing NSF frame by T.38 gateways according to the present invention modifies the facsimile rate negotiation in the facsimile process performed with proprietary frames as a negotiation performed with standard frames by processing of the gateways, so as to ensure that the gateways can extract a rate parameter correctly, the network facsimile service can operate normally, and a negotiation process in which an NSF frame, after being transmitted transparently to a facsimile machine, is converted to a standard frame can be ensured. In particular, according to claims 1 and 5, the frame check sequence of the Non-Standard Setup (NSS) frame data is set to be "bad".

### Brief Description of the Drawings

Fig.1 is a schematic structural diagram of a real-time T.38 network facsimile system in the prior art;
Fig.2 is a schematic flow diagram of stage B in the ordinary facsimile process in the prior art;
Fig.3 is a schematic diagram of the HDLC frame format of a V.21 signal in the prior art;
Fig.4 is a schematic flow diagram of rate negotiation with NSF frames in the ordinary facsimile process in the prior art;
Fig. 5 is a schematic diagram of the processing flow when an NSF frame is received at TDM side in the network facsimile process in the prior art;
Fig. 6 is a schematic diagram of the processing flow when an NSF frame signal is received at IP side in the network facsimile process in the prior art;
Fig. 7 is a schematicdiagramof the effect of overlong flag resulted from the solution of discarding an NSF frame by a gateway in the prior art;
Fig. 8 is a schematic flow diagram showing that the gateway is unable to intervene when an NSF frame reaches to the transmitting facsimile machine in voice state in the prior art;
Fig. 9 is a schematic structural diagram of an NSF frame processed by the T.38 gateways according to an embodiment of the method of the present invention;
Fig. 10 is a schematic flow diagram of modification of NSF parameters by the receiving gateway according to an embodiment of the method of the present invention;
Fig.11 is a schematic flow diagram of modification of NSF parameters by the transmitting gateway according to an embodiment of the method of the present invention;
Fig. 12 is a schematic flow diagram of treatment of FCS check result for NSS frame by the transmitting gateway according to the present invention;
Fig.13 is a schematic flow diagram of modulation and sending of the NSS frame received at IP side with the FCS as BAD by the receiving gateway according to the present invention.

### Detailed Description of the Embodiments

Hereunder the preferred embodiments of the present invention will be described in detail.

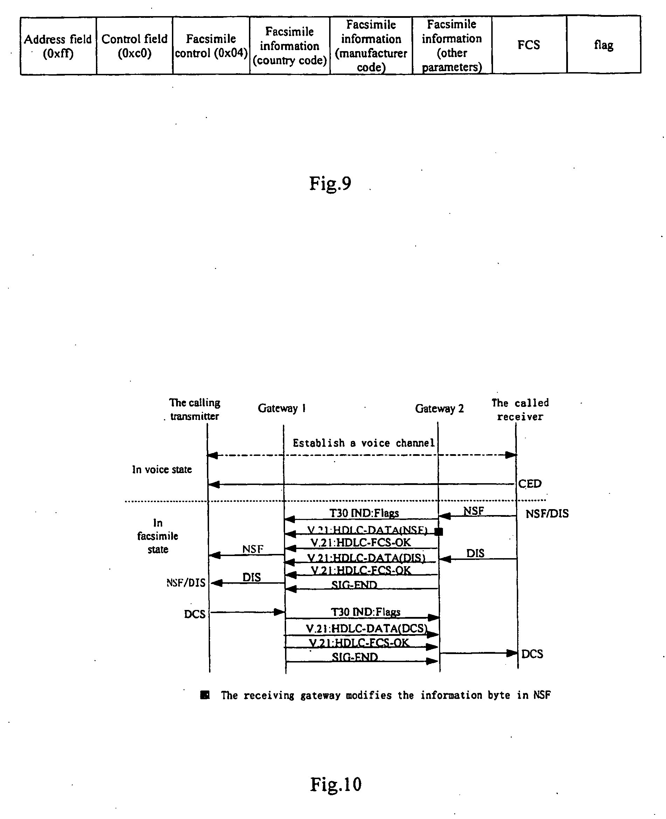

In the method for processing NSF frames by T.38 gateways according to an embodiment of the present invention, the structure of such an NSF frame is shown in Fig. 9; wherein, the NSF frame contains facsimile information, which includes country code, manufacturer code and other parameters; the gateway determines the types of V.21 frames received and demodulated at TDM side as well as V.21 frames received at IP side; if a V.21 frame received at TDM side is an NSF frame, the receiving gateway demodulates a facsimile information field in the received NSF frame and modifies the facsimile information field, as shown in Fig. 10, wherein the shadowed square indicates the receiving gateway has modified the facsimile information byte in the NSF frame in V.21:HDLC-DATA (NSF), i.e., modified the country code byte in the NSF frame as a number which does not correspond to a country name. The facility manufacturer bytes and subsequent facsimile information can be modified randomly, since ITU-T T.35 protocol specifies a correspondence between country names and country codes. Next, the receiving gateway encapsulates the modified NSF frame data into packets and transmits the packets to the IP network. When the transmitting facsimile machine, i.e., a calling transmitter, receives such an NSF frame processed in above manner, it extracts information such as country code and manufacturer code and the like from the information field but finds the information is different from its own definition; therefore, an NSS frame signal will not be returned to the transmitting facsimile machine, i.e., a called receiver be returned with; instead, a standard command DCS signal is returned in accordance with the capability identification DIS.

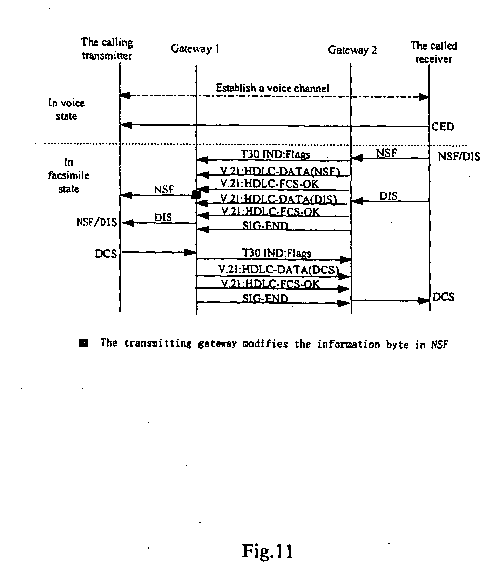

If the transmitting gateway (i.e., Gateway 1) receives an NSF frame signal at IP side, the transmitting gateway modifies the facsimile information field in the NSF frame received at IP side, as shown in Fig.11, wherein the shadowed square indicates the transmitting gateway has modified the information bytes in the NSF frame, i.e., modifies the country code byte in the NSF frame as a number which does not correspond to a country name and modifies the facility manufacturer bytes and subsequent facsimile information randomly; then, it modulates the modified NSF frame data and transmits the same to the facsimile machine, i.e., the calling transmitter.

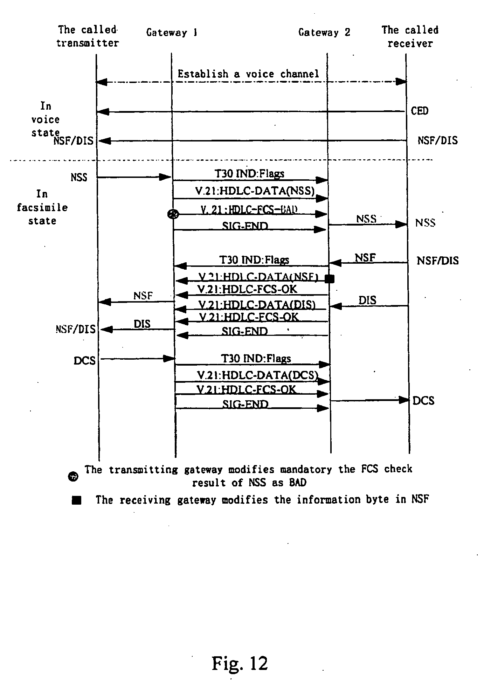

In addition, in order to prevent the NSF frame frombeing transmitted transparently in voice coding mode to the transmitting facsimile machine through the voice channel, which results in the transmitting facsimile machine complying with proprietary specifications returns a NSS frame and the gateway is unable to extract information such as the rate parameter and the like when receiving the NSS frame in T.38 facsimile state, the gateway performs as follows: after the gateway switches to T.38 facsimile state, it determines the types of V.21 frames received and demodulated at TDM side as well as V.21 frames received at IP side; if a NSS frame is received at TDM side, as shown in Fig.12, wherein the shadowed circle indicates the transmitting gateway (i.e., Gateway 1) has modified the check result of the NSS frame as BAD mandatorily, and the shadowed square indicates the receiving gateway (i.e. , Gateway 2) has modified the information bytes in the NSF frame; the transmitting gateway performs as follows: when receiving the NSS frame from the TDM side, it encapsulates the NSS frame data into packets and sends the packets to IP side, with the FCS encapsulated into a FCS-BAD packet, no matter whether the actual result of FCS check is OK or BAD; in this way, the receiving facsimile machine is forced to retransmit an NSF frame; the subsequent procedures are identical to the processing procedures for above NSF frame.

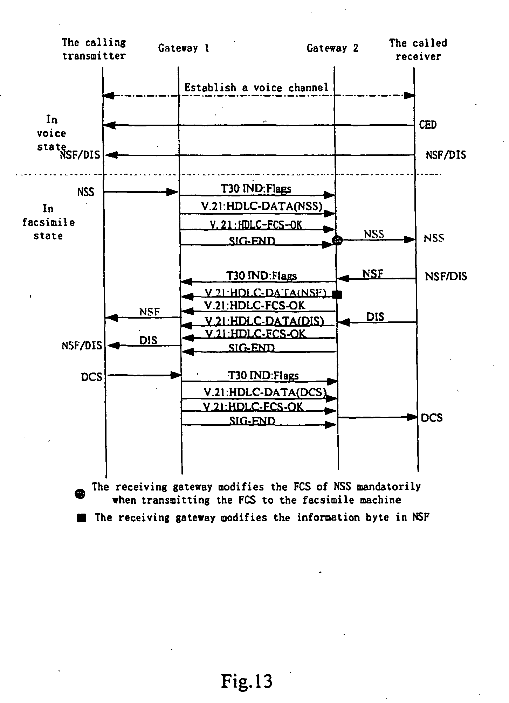

If a NSS frame signal is received at IP side, as shown in Fig. 13, wherein the shadowed circle indicates the receiving gateway (i.e., Gateway 2) has modified the check byte mandatorily when sending the FCS byte of a NSS frame to the receiving facsimile machine (i.e., called facsimile machine), and wherein the shadowed square indicates the receiving gateway has modified the information bytes in the NSF frame, the receiving gateway performs as follows: when receiving the NSS frame and an IFP packet from IP side, it modulates the NSS data and sends the modulated data to the receiving facsimile machine; when sending the FCS of the frame, it treats FCS as BAD result mandatorily no matter whether the actual check result is OK or BAD, and then modifies the FCS value randomly and transmits the same.

In this way, since the receiving gateway has modified the FCS of NSS frame, the receiving facsimile machine will deem the received NSS frame signal as error and will retransmit an NSF/DIS. As a result, the receiving gateways can modify the retransmitted NSF frame with the above method for modifying an NSF frame, to attain the object of performing rate negotiation using the standard frame signal DIS and DCS specified in T.30 protocol. It should be understood that above embodiments are only provided to describe the present invention in further detail and shall not be deemed as any limitation to the protective scope of the present invention, which should be defined by the attached claims

## Claims

1. A method for processing Non-Standard Facilities frame data by T.38 gateways, the T.38 gateways comprising at least one transmitting first gateway and at least one receiving gateway connected over an IP network, the transmitting gateway connected with a transmitting facsimile machine, the receiving gateway connected with a receiving facsimile machine, wherein the method is **characterized by** comprising:
if the transmitting gateway receives a Non-Standard Setup, NSS from a transmitting fax machine, modifying, by the transmitting gateway, a frame check result of the Non-Standard Setup frame data into "BAD", modulating, by the transmitting gateway, the modified NSS frame data and transmit-ting the modulated frame data;
if the receiving gateway receives a modified Non-Standard Setup, NSS, frame data from the transmitting gateway, modifying, by the receiving gateway, randomly the frame check sequence of the Non-Standard Setup frame data,
modulating, by the receiving gateway, the modified NSS and sending the modified NSS to the to the receiving fax machine;
and further comprises:
transmitting, by the receiving facsimile machine, on receiving the modified NSS, a Non-Standard Frame, NSF, to the receiving gateway,
if the receiving gateway receives a non-standard frame, NSF, from the receiving facsimile machine, modifying by the receiving gateway the country code of the NSF such that a Non-Standard Setup frame signal will not be returned by the transmitting fax machine;
encapsulating, by the receiving gateway, the modified NSF into packets and transmitting them to the transmitting gateway.

2. The method according to claim 1, wherein the modifying by the receiving gateway the country code of the NSF comprises:
modifying, by the receiving gateway, a country code in the facsimile information into a number, the number not corresponding to any country number.

3. The method according to claim 2, wherein the modifying the facsimile information further comprises:
modifying, by the receiving gateway, randomly a facility manufacturer code in the facsimile information; or
modifying randomly other parameters in the facsimile information.

4. The method according to claim 1, wherein modifying the frame check result of the Non-Standard Setup frame data into BAD further comprises:
encapsulating, by the transmitting gateway, the modified frame check result of the Non-Standard Setup frame data into a Frame Check Sequence Bad (HDLC-FCS-BAD) packet, and sending the packet.

5. A method for processing Non-Standard Facilities frame data by T.38 gateways, the T.38 gateways comprising at least one transmitting first gateway and at least one receiving gateway connected over an IP network; the transmitting gateway connected with a transmitting facsimile machine, the receiving gateway connected with a receiving facsimile machine, wherein the method is **characterized by** comprising:
if the transmitting gateway receives a non-standard setup, NSS from a transmitting fax machine, modifying, by the transmitting gateway, a frame check result of the Non-Standard Setup frame data into BAD, modulating, by the transmitting gateway, the modified NSS frame data and transmitting the modulated frame data;
if the receiving gateway receives a modified Non-Standard Setup, NSS, frame data from the transmitting gateway, modifying, by the receiving gateway, randomly the frame check sequence of the Non-Standard Setup frame data, modulating, by the receiving gateway, the modified NSS and sending the modified NSS to the receiving fax machine;
and further comprises:
transmitting, by the receiving facsimile machine, on receiving the modified NSS, a non-standard frame, NSF, to the receiving geteway,
if **the transmitting gateway** receives a non-standard frame, NSF, from the receiving facsimile machine, modifying by **the transmitting gateway** the country code of the NSF so such that a Non-Standard Setup frame signal not will be returned by the transmitting fax machine; modulating, by **the transmitting gateway**, the modified NSF data and transmitting the modulated frame data to the transmitting facsimile machine.

6. The method according to claim 1, wherein the modifying by the receiving gateway the country code of the NSF comprises:
modifying, by **the transmitting gateway**, a country code in the facsimile information into a number, the number not corresponding to any country number.

7. The method according to claim 6, wherein the modifying the facsimile information further comprises:
modifying, **the transmitting gateway**, randomly a facility manufacturer code in the facsimile information; or
modifying randomly other parameters in the facsimile information.

## Patentansprüche

1. Verfahren zum Verarbeiten von Nichtstandard-Anlagen-Rahmendaten durch T.38-Gateways, wobei die T.38-Gateways wenigstens ein sendendes erstes Gateway und wenigstens ein empfangendes Gateway, die über ein IP-Netz verbunden sind, umfassen, wobei das sendende Gateway mit einer sendenden Faxmaschine verbunden ist und das empfangende Gateway mit einer empfangenden Faxmaschine verbunden ist, wobei das Verfahren **dadurch gekennzeichnet ist, dass** es Folgendes umfasst:
falls das sendende Gateway ein Nichtstandard-Setup, NSS, von einer sendenden Faxmaschine empfängt, Modifizieren durch das sendende Gateway eines Rahmenprüfergebnisses der Nichtstandard-Setup-Rahmendaten in "BAD",
Modulieren durch das sendende Gateway der modifizierten NSS-Rahmendaten und Senden der modulierten Rahmendaten;
falls das empfangende Gateway modifizierte Nichtstandard-Setup-Rahmendaten, NSS-Rahmendaten, von dem sendenden Gateway empfängt, Modifizieren durch das empfangende Gateway auf zufällige Weise der Rahmenprüffolge der Nichtstandard-Setup-Rahmendaten,
Modulieren durch das empfangende Gateway des modifizierten NSS und Senden des modifizierten NSS zu der empfangenden Faxmaschine;
und ferner Folgendes umfasst:
Senden durch die empfangende Faxmaschine beim Empfangen des modifizierten NSS eines Nichtstandard-Rahmens, NSF, zu dem empfangenden Gateway,
falls das empfangende Gateway einen Nichtstandard-Rahmen, NSF, von der empfangenden Faxmaschine empfängt, Modifizieren durch das empfangende Gateway des Ländercodes des NSF, derart, dass durch die sendende Faxmaschine kein Nichtstandard-Setup-Rahmensignal zurückgeleitet wird;
Einkapseln durch das empfangende Gateway des modifizierten NSF in Pakete und Senden der Pakete zu dem sendenden Gateway.

2. Verfahren nach Anspruch 1, wobei das Modifizieren durch das empfangende Gateway des Ländercodes des NSF Folgendes umfasst:
Modifizieren durch das empfangende Gateway eines Ländercodes in den Faxinformationen in eine Nummer, wobei die Nummer keiner Landesnummer entspricht.

3. Verfahren nach Anspruch 2, wobei das Modifizieren der Faxinformationen ferner Folgendes umfasst:
Modifizieren durch das empfangende Gateway auf zufällige Weise eines Anlagenhersteller-Codes in den Faxinformationen; oder
Modifizieren auf zufällige Weise anderer Parameter in den Faxinformationen.

4. Verfahren nach Anspruch 1, wobei das Modifizieren des Rahmenprüfergebnisses der Nichtstandard-Setup-Rahmendaten in "BAD" ferner Folgendes umfasst:
Einkapseln durch das sendende Gateway des modifizierten Rahmenprüfergebnisses der Nichtstandard-Setup-Rahmendaten in ein Rahmenprüffolgen-schlecht-Paket (HDLC-FCS-BAD-Paket) und Senden des Pakets.

5. Verfahren zum Verarbeiten von Nichtstandard-Anlagen-Rahmendaten durch T.38-Gateways, die wenigstens ein erstes sendendes Gateway und wenigstens ein empfangendes Gateway, die über einen IP-Netz verbunden sind, umfassen, wobei das sendende Gateway mit einer sendenden Faxmaschine verbunden ist und wobei das empfangende Gateway mit einer empfangenden Faxmaschine verbunden ist, wobei das Verfahren **dadurch gekennzeichnet ist, dass** es Folgendes umfasst:
falls das sendende Gateway ein Nichtstandard-Setup, NSS, von einer sendenden Faxmaschine empfängt, Modifizieren durch das sendende Gateway eines Rahmenprüfergebnisses der Nichtstandard-Setup-Rahmendaten in "BAD" und Modulieren durch das sendende Gateway der modifizierten NSS-Rahmendaten und Senden der modulierten Rahmendaten;
falls das empfangende Gateway modifizierte Nichtstandard-Setup-Rahmendaten, NSS-Rahmendaten, von dem sendenden Gateway empfängt, Modifizieren durch das empfangende Gateway auf zufällige Weise der Rahmenprüffolge der Nichtstandard-Setup-Rahmendaten und Modulieren durch das empfangende Gateway des modifizierten NSS und Senden des modifizierten NSS zu der empfangenden Faxmaschine;
und ferner Folgendes umfasst:
Senden durch die empfangende Faxmaschine beim Empfangen des modifizierten NSS eines Nichtstandard-Rahmens, NSF, zu dem empfangenden Gateway,
falls das sendende Gateway einen Nichtstandard-Rahmen, NSF, von der empfangenden Faxmaschine empfängt, Modifizieren durch das sendende Gateway des Ländercodes des NSF, derart, dass durch die sendende Faxmaschine kein Nichtstandard-Setup-Rahmensignal zurückgeleitet wird;
Modulieren durch das sendende Gateway der modifizierten NSF-Daten und Senden der modulierten Rahmendaten zu der sendenden Faxmaschine.

6. Verfahren nach Anspruch 1, wobei das Modifizieren durch das empfangende Gateway des Ländercodes des NSF Folgendes umfasst:
Modifizieren durch das sendende Gateway eines Ländercodes in den Faxinformationen in eine Nummer, wobei die Nummer keiner Landesnummer entspricht.

7. Verfahren nach Anspruch 6, wobei das Modifizieren der Faxinformationen ferner Folgendes umfasst:
Modifizieren durch das sendende Gateway auf zufällige Weise eines Anlagenhersteller-Codes in den Faxinformationen; oder
Modifizieren auf zufällige Weise anderer Parameter in den Faxinformationen.

## Revendications

1. Procédé de traitement de données de trame de Fonctions Non Normalisées par des passerelles T.38, les passerelles T.38 comprenant au moins une première passerelle d'émission et au moins une passerelle de réception connectées sur un réseau IP, la passerelle d'émission étant connectée à un télécopieur émetteur, la passerelle de réception étant connectée à un télécopieur récepteur, le procédé étant **caractérisé en ce qu'**il comprend :
si la passerelle d'émission reçoit un Etablissement Non Normalisé, NSS, depuis un télécopieur émetteur, la modification, par la passerelle d'émission, d'un résultat de vérification de trame des données de trame d'Etablissement Non Normalisé en un résultat incorrect "BAD",
la modulation, par la passerelle d'émission, des données de trame de NSS modifiées et l'émission des données de trame modulées ;
si la passerelle de réception reçoit des données de trame d'Etablissement Non Normalisé, NSS, modifiées depuis la passerelle d'émission, la modification, par la passerelle de réception, de manière aléatoire, de la séquence de vérification de trame des données de trame d'Etablissement Non Normalisé,
la modulation, par la passerelle de réception, du NSS modifié et l'envoi du NSS modifié au télécopieur récepteur ;
et comprend en outre :
l'émission, par le télécopieur récepteur, à la réception du NSS modifié, d'une Trame Non Normalisée, NSF, vers la passerelle de réception,
si la passerelle de réception reçoit une Trame Non Normalisée, NSF, depuis le télécopieur récepteur, la modification par la passerelle de réception de l'indicatif national de la NSF de telle sorte qu'un signal de trame d'Etablissement Non Normalisé ne soit pas renvoyé par le télécopieur émetteur ;
l'encapsulation, par la passerelle de réception, de la NSF modifiée en paquets et la transmission des paquets à la passerelle d'émission.

2. Procédé selon la revendication 1, dans lequel la modification par la passerelle de réception de l'indicatif national de la NSF comprend :
la modification, par la passerelle de réception, d'un indicatif national dans les informations de télécopieur en un numéro, le numéro ne correspondant à aucun numéro de pays.

3. Procédé selon la revendication 2, dans lequel la modification des informations de télécopieur comprend en outre :
la modification, par la passerelle de réception, de manière aléatoire d'un code de fabricant de fonction dans les informations de télécopieur ; ou
la modification de manière aléatoire d'autres paramètres dans les informations de télécopieur.

4. Procédé selon la revendication 1, dans lequel la modification du résultat de vérification de trame des données de trame d'Etablissement Non Normalisé en un résultat incorrect BAD comprend en outre :
l'encapsulation, par la passerelle d'émission, du résultat de vérification de trame modifié des données de trame d'Etablissement Non Normalisé en un paquet de Séquence de Vérification de Trame incorrecte (HDLC-FCS-BAD), et l'envoi du paquet.

5. Procédé de traitement de données de trame de Fonctions Non Normalisées par des passerelles T.38, les passerelles T.38 comprenant au moins une première passerelle d'émission et au moins une passerelle de réception connectées sur un réseau IP, la passerelle d'émission étant connectée à un télécopieur émetteur, la passerelle de réception étant connectée à un télécopieur récepteur, le procédé étant **caractérisé en ce qu'**il comprend :
si la passerelle d'émission reçoit un Etablissement Non Normalisé, NSS, depuis un télécopieur émetteur, la modification, par la passerelle d'émission, d'un résultat de vérification de trame des données de trame d'Etablissement Non Normalisé en un résultat incorrect "BAD", la modulation, par la passerelle d'émission, des données de trame de NSS modifiées et la transmission des données de trame modulées ;
si la passerelle de réception reçoit des données de trame d'Etablissement Non Normalisé, NSS, modifiées depuis la passerelle d'émission, la modification, par la passerelle de réception, de manière aléatoire, de la séquence de vérification de trame des données de trame d'Etablissement Non Normalisé, la modulation, par la passerelle de réception, du NSS modifié et l'envoi du NSS modifié au télécopieur récepteur ;
et comprend en outre :
l'émission, par le télécopieur récepteur, à la réception du NSS modifié, d'une Trame Non Normalisée, NSF, vers la passerelle de réception,
si la passerelle d'émission reçoit une Trame Non Normalisée, NSF, depuis le télécopieur récepteur, la modification par la passerelle d'émission de l'indicatif national de la NSF de telle sorte qu'un signal de trame d'Etablissement Non Normalisé ne soit pas renvoyé par le télécopieur émetteur ;
la modulation, par la passerelle d'émission, des données de NSF modifié et la transmission des données de trame modulées au télécopieur émetteur.

6. Procédé selon la revendication 1, dans lequel la modification par la passerelle de réception de l'indicatif national de la NSF comprend :
la modification, par la passerelle d'émission, d'un indicatif national dans les informations de télécopieur en un numéro, le numéro ne correspondant à aucun numéro de pays.

7. Procédé selon la revendication 6, dans lequel la modification des informations de télécopieur comprend :
la modification, par la passerelle d'émission, d'un code de fabricant de fonction dans les informations de télécopieur ; ou
la modification de manière aléatoire d'autres paramètres dans les informations de télécopieur.
